# DEMANDE DE BREVET EUROPEEN

(11) **EP 0 909 870 A1**
(43) Date de publication de la demande: **21.04.1999**
(21) Numéro de dépôt: 97203211.4
(22) Date de dépôt: 15.10.1997
(51) Int. Cl.: E21B 17/046, F16D 1/112, B23B 31/113

(54) **Accouplement pour dispositif à transmission de forces**

(71) Demandeur: DIAMANT BOART Société Anonyme, 1190 Bruxelles (BE)
(72) Inventeur: Pirlet, Jacques, 1410 Waterloo (BE)
(74) Mandataire: Callewaert, Jean

(57) **Abrégé**

Accouplement pour dispositif à transmission de forces, comprenant un tube cylindrique (1) à section circulaire dans lequel peut s'engager une tête d'entraînement (5) destinée à soumettre ce tube (1) à une rotation autour de son axe, cette tête (5) présentant au moins une salle latérale (7) pouvant se loger dans une gorge (4) ménagée dans la paroi cylindrique du tube (1) et s'étendant à partir du bord circulaire (10) de cette paroi, du côté d'introduction de la tête d'entraînement (5), pour se terminer transversalement à l'axe du tube (1), et dans le sens de rotation de la tête d'entraînement (5) permettant de bloquer le tube (1) d'une manière élastique et amovible sur cette tête d'entraînement (5).

## Description

La présente invention est relative à un accouplement pour dispositif à transmission de forces, notamment pour des forets à couronne abrasive, tel que couronne diamantée, comprenant un tube cylindrique à section circulaire dans lequel peut s'engager une tête d'entraînement destinée à soumettre ce tube à une rotation autour de son axe, cette tête présentant au moins une saillie latérale pouvant se loger dans une gorge ménagée dans la paroi cylindrique du tube et s'étendant à partir du bord circulaire de cette paroi, du côté d'introduction de la tête d'entraînement, pour se terminer transversalement à l'axe du tube, et dans le sens de rotation de la tête d'entraînement permettant de bloquer le tube d'une manière amovible sur cette tête d'entraînement.

La présente invention concerne plus particulièrement des outils de forage dans le domaine de la construction et des outils destinés au perçage et au forage de trous de différents diamètres dans des matériaux de construction de nature très variée, telle que béton avec ou sans armature, matériaux pierreux naturels ou reconstitués, du nos, du métal, etc.

Si l'outil est constitué d'un foret à couronne abrasive, le forage au moyen de cet outil est appelé "carottant", car il détruit la matière à la circonférence du trou à réaliser et laisse intacte la partie centrale qui sera enlevée à la fin de l'opération de forage.

L'invention vise surtout un accouplement ou système d'assemblage permettant de monter, d'une manière amovible, des forets à couronne abrasive sur un support d'entraînement, tout en n'étant pas explicitement limité à une telle application.

Dans le document EP-O235581, on décrit un accouplement pour tringlerie à transmission de forces du type précité dans lequel le tube est coincé contre une plaque de support de la tête d'entraînement.

Ceci présente l'inconvénient de nécessiter un effort important ou un outillage spécifique lors du démontage du fait que le tube a tendance à se déformer et à se coincer davantage en cours d'utilisation, ce qui rend le démontage précaire, voire impossible.

Un des buts essentiels de la présente invention est de proposer un accouplement du type précité, appelé encore à baïonnette, qui permet un assemblage et un démontage très faciles et répétés du foret et ceci sans aucun outillage.

A cet effet, suivant l'invention, des moyens élastiques sont prévus pour maintenir la saillie précitée d'une manière amovible dans une position de blocage dans la gorge.

Avantageusement, les moyens précités comprennent, à une distance du fond de la gorge correspondant sensiblement à l'épaisseur de la saillie, au moins un arrêt permettant de maintenir cette dernière d'une manière élastique dans sa position de blocage dans le fond de la gorge.

Selon une forme de réalisation particulière de l'invention, les moyens élastiques comprennent une languette qui délimite latéralement et élastiquement la gorge sur une certaine distance de sa longueur et dont son extrémité libre se situe à proximité du fond de celle-ci.

Suivant une autre forme de réalisation particulière de l'invention, les moyens élastiques précités comprennent un élément élastique entre le tube et un appui dépassant latéralement autour de la tête d'entraînement et s'étendant du côté de la saillie opposé à celui où se situe le foret, de manière à permettre, par compression de cet élément lors de l'engagement de la saillie susdite dans la gorge, de maintenir celle-ci dans la position de blocage précitée.

D'autres détails et particularités de l'invention ressortiront de la description donnée ci-après, à titre d'exemple non limitatif, de quelques formes de réalisation particulières de l'invention avec référence aux dessins annexés.
La figure 1 est une vue explosée en perspective d'une première forme de réalisation d'un accouplement suivant l'invention appliqué à un foret à couronne abrasive.
La figure 2 est, à plus grande échelle et en coupe, une vue de détail partielle de cette première forme de réalisation.
La figure 3 est une vue analogue à celle de la figure 2 d'une deuxième forme de réalisation de l'invention.

Dans les différentes figures, les mêmes chiffres de référence concernent des éléments identiques ou analogues.

Quoique l'invention ne soit pas nécessairement limitée à un accouplement pour des forets à couronne de forage diamantée, étant donné que ceci constitue une forme de réalisation préférentielle de l'invention, la description sera limitée à cette application particulière.

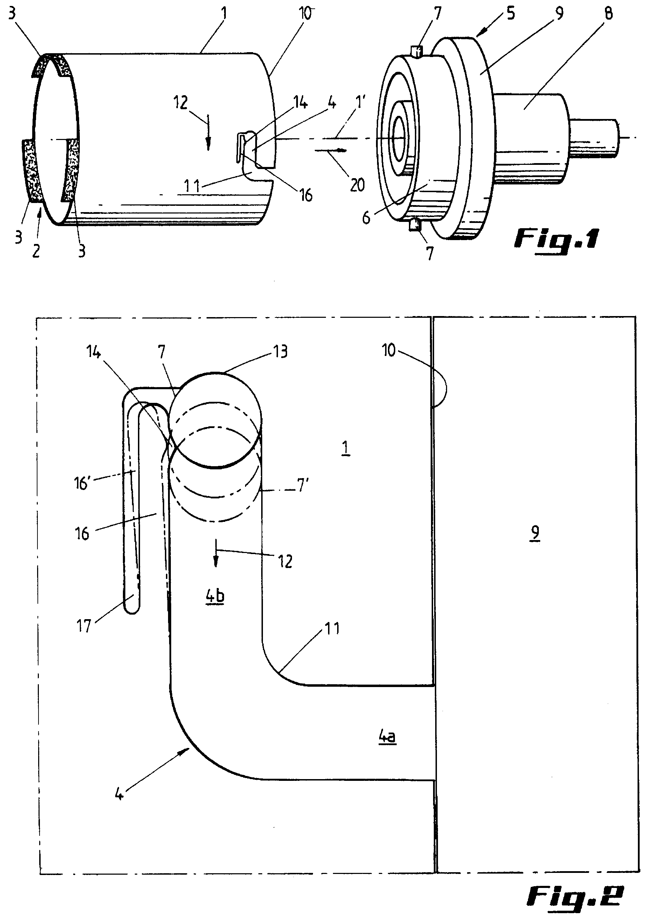

Le foret tel que montré à la figure 1 comprend un tube cylindrique 1 à section transversale circulaire présentant à une de ses extrémités une couronne abrasive 2 constituée d'une succession de segments diamantés 3, l'autre extrémité du tube 1 présentant deux gorges 4 diamétralement opposées.

Ce tube cylindrique 1 peut être monté sur une tête d'entraînement 5 pouvant être fixée sur une machine de forage non représentée.

Cette tête d'entraînement 5 comprend une partie cylindrique 6 dont le diamètre correspond sensiblement à celui du diamètre intérieur du tube 1, de manière à permettre d'engager cette partie 6 dans l'extrémité du tube 1 présentant la gorge 4;

Deux saillies 7 s'étendent diamétralement opposées sur la paroi latérale de la partie cylindrique 6 de la tête d'entraînement 5, d'une manière telle à pouvoir s'engager dans les gorges correspondantes 4 du tube 1 au moment où cette partie cylindrique 6 est introduite dans le tube 1. A cet égard, la largeur des gorges 4 correspond sensiblement à l'épaisseur des saillies 7, qui sont de préférence formées par des bouts de tige cylindriques s'étendant radialement sur la paroi de la partie 6 de la tête d'entraînement 5. Cette tête d'entraînement 5 présente, sur le côté de la partie cylindrique 6 opposé à celui dirigé vers le tube 1, un embout 8 coaxial à la partie cylindrique 6 et fileté intérieurement, de manière à permettre de visser cette tête 5 sur la machine de forage.

De plus, un appui, formé d'un rebord ou disquette 9, fait saillie sur tout le pourtour de la partie cylindrique 6, du côté de cette dernière sur lequel est prévu l'embout 8 et permet, lorsque ladite partie cylindrique 6 est engagée dans le tube 1 de s'appuyer contre ce dernier.

Les gorges 4 présentent l'allure d'un L comprenant deux branches 4a et 4b qui s'étendent dans la paroi cylindrique du tube 1, à partir du bord circulaire 10 de cette dernière, du côté d'introduction de la tête d'entraînement 5, et sur une certaine distance parallèlement à l'axe du tube pour ensuite former un coude 11 et s'étendre perpendiculairement à un plan passant par le bord circulaire 10 du tube 1 et perpendiculaire à l'axe de ce dernier.

Ainsi, lors de l'introduction de la partie cylindrique 6 de la tête d'entraînement 5 dans l'extrémité correspondante du tube cylindrique 1, on place l'entrée des gorges 4 dans le bord circulaire 10 de ce dernier en regard des saillies correspondantes 7 prévues sur cette partie cylindrique 6 pour les engager ensuite dans ces gorges 4 en déplaçant d'abord le tube 1 suivant son axe 1' vers la tête d'entraînement 5, comme indiqué par la flèche 20, et, lorsque les saillies 7 arrivent à la partie coudée 11 des gorges 4, on fait subir au tube 1 une rotation autour de son axe dans le sens indiqué par la flèche 12 jusqu'au moment où les saillies 7 atteignent le fond 13 de leur gorge 4 correspondante.

Suivant l'invention, des moyens sont prévus pour maintenir les saillies 7 d'une manière élastique et amovible dans une position de blocage dans la gorge 4 qui, dans la forme de réalisation illustrée par les figures, se situe contre le fond 13 de cette dernière.

A cet égard, dans les formes de réalisation particulières illustrées par les figures, ces moyens comprennent un arrêt 14 qui est prévu sur le bord longitudinal 15 des gorges 4, à l'intérieur de ces dernières, à une distance de leur fond 13 correspondant sensiblement au diamètre ou à l'épaisseur des saillies 7, de manière à permettre de les maintenir dans la position de blocage contre ce fond 13 des gorges 4.

Afin de permettre aux saillies 7 de franchir l'arrêt 14 en soumettant, comme mentionné ci-dessus, le tube 1 à une rotation autour de son axe dans le sens de la flèche 12 et d'occuper donc sa position de blocage d'une manière amovible et élastique, suivant l'invention, différentes solutions ont été envisagées.

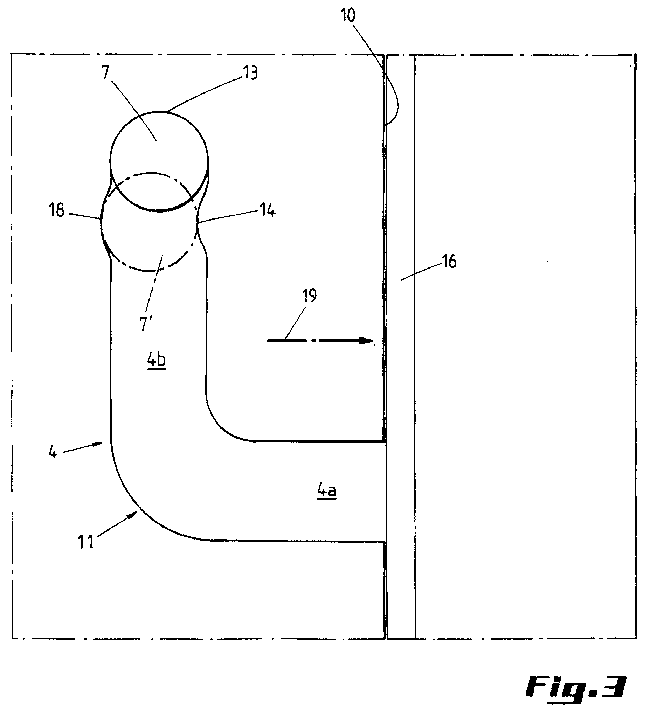

Ainsi, dans la forme de réalisation illustrée dans la figure 1 et plus en détail dans la figure 2, les moyens élastiques précités comprennent une languette 16 qui délimite latéralement et élastiquement les gorges 4 sur une certaine distance de leur longueur pour aboutir avec son extrémité libre jusqu'à proximité du fond 13 de celles-ci. Cette languette 16 est de préférence prévue du côté des gorges 4 opposé à celui du côté du bord circulaire 10 du tube 1, tandis que l'arrêt 14 qui est formé, dans le présent cas, par un bossage se trouve sur la languette 16 même.

Ceci a comme résultat, lorsque les saillies 7 sont engagées dans leurs gorges 4 correspondantes et que ces dernières agissent sur ce bossage, que la languette 16 subit une flexion élastique, comme indiqué en traits interrompus sur la figure 2 et portant la référence 16'. Après que la saillie 7 ait franchi le bossage 14, la languette 16 revient dans sa position initiale en maintenant la saillie 7 dans sa position de blocage, contre le fond 13 de la gorge 4. Ainsi, aucun coincement des saillies 7 n'a lieu dans leur gorge correspondante 4 ni du bord circulaire 10 du tube 1 contre le bord du disque d'appui 9.

A cet égard, il est important de noter que ceci constitue une différence essentielle entre l'objet du brevet européen O235581 et l'invention. En effet, suivant cet état antérieur de la technique, le blocage du tube sur la tête d'entraînement a lieu par frottement et, dans certains cas, par une déformation non seulement du bord circulaire 10 contre le disque d'appui 9 mais également des gorges 4, ce qui aura nécessairement comme conséquence que le démontage du tube de la tête d'entraînement risque de poser des problèmes non négligeables, comme déjà exposé ci-dessus.

Quoiqu'une préférence soit donnée pour une languette 16 disposée du côté opposé de la gorge 4 par rapport au bord circulaire 10 du tube, dans certains cas on peut envisager de placer cette languette de l'autre côté de la gorge pour autant que ceci n'affaiblit pas trop la zone du tube 1 à proximité de son bord circulaire 10.

Il y a encore lieu de noter que la branche 4b des gorges 4, qui s'étend parallèlement à la disquette d'appui 9, se trouve à une distance telle de cette disquette que, dans la position de blocage des saillies 7, le bord circulaire 10 du tube 1 soit en contact avec la disquette d'appui, sans toutefois être coincée contre cette dernière, pour que la poussée axiale de la machine de forage se transmette au maximum via ce disque d'appui 9 sur le tube 1 et non sur les saillies 7.

La fonction de la saillie 7 en position de travail, c'est-à-dire dans sa position de blocage dans sa gorge correspondante 4, est uniquement de transmettre le mouvement de rotation de la tête d'entraînement 5 au tube 1.

La déformation imposée à la languette 16 par les saillies 7 au moment où ces dernières passent sur le bossage respectif 14 reste dans le domaine élastique de la matière dont est constitué le tube en tenant compte de la longueur et de la section de la languette.

Ceci permettra donc de réaliser un grand nombre de montages et de démontages sans détérioration de la qualité de l'accouplement.

La découpe 17 du côté de la languette opposé à la gorge est de largeur au moins équivalente à la hauteur du bossage 14 de manière à permettre à la languette de se déformer suffisamment pour laisser passer la saillie 7.

La découpe 17 est de préférence réalisée au laser ou par jets d'eau ou par tout autre moyen de découpe de précision permettant de respecter le profil demandé.

Le maintien du tube 1 sur la tête d'entraînement 5 à l'arrêt et en rotation du foret, c'est-à-dire en accélération du travail ou freinage, est assuré par la languette 16 qui maintient donc, grâce à la présence du bossage 14, le tube 1 en place sur les saillies 7.

Par contre, l'entraînement du foret par la tête d'entraînement 5 est assuré par le contact entre les saillies 7 et le fond 13 des gorges 4 pratiquées dans le tube 1.

La forme de réalisation telle qu'illustrée par la figure 3 se distingue par rapport à la précédente par le fait que les moyens élastiques sont formés par un élément élastique 16 prévu entre la disquette d'appui 9 de la tête d'entraînement 5 et le bord circulaire 10 du tube 1.

De plus, le bossage 14 se situe sur le bord longitudinal de la branche 4b de la gorge 4 et un évidement correspondant 18 dans le bord latéral opposé des gorges 4 de manière à former un coude qui est tel à permettre le passage des saillies 7.

Ainsi, lorsque la saillie 7' se présente au niveau du bossage 14, comme indiqué en traits mixtes, celle-ci s'engagera dans l'évidement 18, de manière à faire subir au tube 1 un déplacement vers le disque d'appui 9, comme indiqué par la flèche 19, en écrasant partiellement l'élément élastique 16.

Passé le bossage, c'est-à-dire lorsque la saillie 7 s'applique contre le fond 13 de sa gorge 4, le tube 1 subira un déplacement axial dans le sens inverse de la flèche 19 en permettant à l'élément élastique 16 de reprendre sensiblement sa forme initiale non comprimée ou légèrement comprimée. Ceci a donc comme conséquence que, comme dans la forme de réalisation précédente, de maintenir la saillie en place dans sa position de blocage par pur effet élastique.

L'élément élastique 16 peut être constitué par un anneau en matière sensiblement élastique, par exemple caoutchouc, s'étendant autour de la partie cylindrique 6 de la tête d'entraînement 5 contre la disquette d'appui 9.

Dans certain cas, cet anneau élastique peut être remplacé par un ressort hélicoïdal enfilé sur la partie cylindrique 6 de la tête d'entraînement 5, ou encore par un coussin d'air sous pression.

Une variante consiste à combiner les deux formes de réalisation précédentes, c'est-à-dire à prévoir dans la forme de réalisation de la figure 2, entre le bord circulaire 10 du tube 1 et le disque d'appui 9, un élément élastique du type utilisé dans la forme de réalisation représentée à la figure 3.

De bons résultats ont été obtenus avec un tube 1 réalisé en acier courant du type ST35 ou ST37 (din 2391) dont l'épaisseur varie de 1 mm à 3 mm et dont la languette 16 présente une largeur de 1 à 3 mm en fonction de la dureté souhaitée pour le blocage du tube 1 sur la tête d'entraînement 5.

Le diamètre extérieur du tube varie généralement de 20 mm à 150 mm. Il peut par exemple présenter un diamètre extérieur de 66 mm pour une épaisseur de sa paroi de 1,5 mm ou encore un diamètre de 80 mm pour une épaisseur de paroi de 2 mm.

Etant donné que les trous à forer dans les divers matériaux ont des diamètres et des longueurs très variables, il est donc important de pouvoir utiliser des tubes de sections et longueurs très variées. Généralement les diamètres de forage sont compris entre 10 et 600 mm, les longueurs y associées se situant entre 25 et 1000 mm.

Il est bien entendu que l'invention n'est pas limitée aux différentes formes de réalisation décrites ci-dessus et que bien des variantes peuvent être envisagées sans sortir du cadre de la présente invention.

Ainsi, l'accouplement suivant l'invention pourrait être utilisé pour tous outils pour lesquels un problème sensiblement analogue à celui d'un foret pourrait se poser.

## Revendications

1. Accouplement pour dispositif à transmission de forces, notamment pour des forets à couronne abrasive, comprenant un tube cylindrique (1) à section circulaire dans lequel peut s'engager une tête d'entraînement (5) destinée à soumettre ce tube (1) à une rotation autour de son axe, cette tête (5) présentant au moins une saillie latérale (7) pouvant se loger dans une gorge (4) ménagée dans la paroi cylindrique du tube (1) et s'étendant à partir du bord circulaire (10) de cette paroi, du côté d'introduction de la tête d'entraînement (5), pour se terminer transversalement à l'axe du tube (1), et dans le sens de rotation de la tête d'entraînement (5) permettant de bloquer le tube (1) d'une manière amovible sur cette tête d'entraînement (5), caractérisé en ce que des moyens élastiques (14, 16, 19) sont prévus pour maintenir la saillie d'une manière amovible dans une position de blocage dans la gorge (4).

2. Accouplement suivant la revendication 1, caractérisé en ce que les moyens précités comprennent, à une distance du fond (13) de la gorge (4) correspondant sensiblement à l'épaisseur de la saillie (7), au moins un arrêt (14) permettant de maintenir cette dernière d'une manière élastique dans sa position de blocage contre ou dans le fond (13) de la gorge (4).

3. Accouplement suivant la revendication 1, caractérisé en ce que l'arrêt (14) est essentiellement constitué d'un bossage (14) à l'intérieur de la gorge (4), sur un de ses bords longitudinaux (15), qui est tel à permettre le passage et le maintien de la saillie (7) contre le fond (13) de la gorge (4) sous l'effet des moyens élastiques précités.

4. Accouplement suivant la revendication 3, caractérisé en ce qu'un évidement (18) correspondant s'étend dans le bord longitudinal opposé à celui présentant le bossage précité (14), en regard de ce dernier de manière à former un coude dans la gorge (7).

5. Accouplement suivant l'une quelconque des revendications 1 à 4, caractérisé en ce que les moyens élastiques comprennent une languette (16) qui délimite latéralement et élastiquement la gorge (4) sur une certaine distance de sa longueur et dont l'extrémité libre se situe à proximité du fond (13) de celle-ci.

6. Accouplement suivant la revendication 5, caractérisé en ce que le bossage précité (14) est prévu sur la languette précitée (16) à proximité de l'extrémité libre de cette dernière.

7. Accouplement suivant l'une ou l'autre des revendications 5 et 6, caractérisé en ce que la languette (16) s'étend du côté de la gorge (4) opposé à celui orienté vers la tête d'entraînement (5).

8. Accouplement suivant l'une quelconque des revendications 5 à 7, caractérisé en ce que la languette (16) s'étend suivant une direction parallèle à un plan perpendiculaire à l'axe du tube (1).

9. Accouplement suivant l'une quelconque des revendications 1 à 8, caractérisé en ce que les moyens élastiques précités comprennent un élément élastique (16) entre le tube (1) et un appui (9) dépassant latéralement autour de la tête d'entraînement (5) et s'étendant du côté de la saillie (7) opposé à celui où se situe la couronne abrasive (2), de manière à permettre, par compression de cet élément (16) lors de l'engagement de la saillie (7) susdite dans la gorge (4), de maintenir celle-ci dans la position de blocage précitée.

10. Accouplement suivant la revendication 9, caractérisé en ce que l'appui (9) est solidaire de la partie de la tête d'entraînement (5) s'engageant dans le tube (1).

11. Accouplement suivant l'une ou l'autre des revendications 9 et 10, caractérisé en ce que l'élément élastique est constitué d'un anneau élastique (16) coaxial à la tête d'entraînement (5) et le tube (1) dans lequel cette tête (5) est engagée.

12. Accouplement suivant l'une quelconque des revendications 1 à 11, caractérisé en ce que la gorge (4) présente sensiblement l'allure d'un L dont une des branches (4a) s'étend sensiblement parallèlement à l'axe du tube (1), l'autre branche (4b) se raccordant à la branche (4a) citée en premier lieu par une partie coudée (11) et s'étendant sensiblement parallèlement à un plan perpendiculaire à l'axe (1') du tube (1).

13. Accouplement suivant l'une quelconque des revendications 1 à 12, caractérisé en ce que la tête d'entraînement (5) présente plusieurs saillies (7) réparties uniformément sur le pourtour de cette dernière et pouvant coopérer avec des gorges correspondantes (4) dans le tube précité (1).

14. Foret à couronne abrasive de forage destiné à coopérer avec l'accouplement suivant l'une quelconque des revendications 1 à 13, comprenant un tube cylindrique (1) dans lequel peut s'engager une tête d'entraînement destiné à soumettre ce tube (1) à une rotation autour de son axe, cette tête (5) présentant au moins une saillie latérale (7) pouvant se loger dans une gorge (4) ménagée dans la paroi cylindrique du tube (1) et s'étendant à partir du bord circulaire (10) de cette paroi, du côté d'introduction de la tête d'entraînement (5), pour se terminer transversalement à l'axe du tube (1), et dans le sens de rotation de la tête d'entraînement (5) permettant bloquer le tube (1) d'une manière amovible sur cette tête d'entraînement (5), caractérisé en ce qu'il comprend des moyens pour maintenir la saillie (7) susdite d'une manière élastique dans une position de blocage dans la gorge (4).
